# EUROPEAN PATENT SPECIFICATION

(11) **EP 0 386 062 B1**
(45) Date of publication and mention of the grant of the patent: **09.03.1994**
(21) Application number: 88909576.6
(22) Date of filing: 14.11.1988
(51) Int. Cl.: B29D 30/08

(54) **TYRE MANUFACTURE**
HERSTELLUNG VON REIFEN
FABRICATION D'UN PNEU

(30) Priority: 13.11.1987 GB 8726629
(43) Date of publication of application: 12.09.1990
(73) Proprietor: BRIDGESTONE/FIRESTONE, INC., Akron, Ohio 44317 (US)
(72) Inventor: HOLROYD, Colin, Southport Lancashire PR9 9PU (GB); GOODFELLOW, Anthony, Gerald, Liverpool L31 7AA (GB)
(74) Representative: Dearing-Lambert, Peter Richard
(86) International application number: GB8800986
(87) International publication number: WO8904248

(56) References cited:
- DE-A- 2 026 130
- DE-A- 3 401 076
- DE-B- 2 553 603
- GB-A- 1 592 854

## Description

This invention relates to tyre manufacture.

Conventional methods of tyre manufacture comprise assembling a "green cover" from a plurality of unvulcanised rubber components, placing the green cover into a mould and applying heat and pressure so that the final shape, particularly the tread pattern, is imparted to the covers and the rubber cured, so that a complete tyre is formed. The stages of moulding and curing the tyre are expensive because a large, steam heated press working on a heating cycle of about 15 minutes, for a size of tyre suitable for a car, is required. The press is conventionally designed to accommodate two tyre moulds so two tyres are produced simultaneously but the moulds themselves are expensive particularly because they each comprise a large number, e.g. up to 64, tread moulding segments mounted in a backing ring. Each individual segment is made from die-cast aluminium alloy and machined to a complex shape so is therefore expensive. The other parts of the mould for shaping the tyre sidewalls, etc. are also expensive.

Not only are the moulds expensive but they are only capable of being used to form one size of tyre. For example it is not possible to allow a range of tyres with different tread widths to be formed in the same mould.

It is an object of the present invention to attempt to overcome or alleviate these disadvantages.

GB-A-1 592 854 discloses a procedure which essentially differs in that the tread package is fully cured before bonding to the carcass. Maintenance of the tread package in a partially uncured state when assembled to the carcass provides better accuracy of tread location and better uniformity.

In accordance with the present invention a method of manufacturing a tyre comprises assembling an annular tread package which includes uncured rubber into a pattern ring to impart a pattern to the tread rubber, heating the tread rubber to become partially cured, positioning the remaining components of the tyre within the annular tread package to assemble a complete tyre, the positioning taking place either before or after the tread rubber is heated, separating the pattern ring from the tread rubber, placing the assembled tyre within a mould which contains no means to impart a pattern to the tread rubber and heating the mould completely to cure the tyre.

The tread package may comprise tread rubber, sub-tread (or under-tread) rubber, a breaker comprising one or more layers of rubberised cord fabric, a breaker cushion and filler strips. Not all these components may be present depending on the type of tyre being manufactured.

The tread package may be assembled on a mandrel before being assembled into the pattern ring.

The pattern ring may be heated to cause at least partial curing of the tread rubber, and depending on the temperature and length of time for which the ring is heated, to cause at least partial curing of the remaining rubber in the package a veneer of rubber on the radially inner side of the package is preferably partially or wholly uncured so as to facilitate adhesion to the remaining parts of the tyre, particularly the tyre carcass, during subsequent assembly.

The pattern ring preferably comprises a plurality of segments which may be moved radially inward or outward in a controlled manner, in particular outward movement causing the separation of the ring from the tread rubber at the appropriate stage of tyre manufacture.

The mould is preferably capable of being adapted to cure, one at a time, tyres of different tread widths.

Two embodiments of the invention will now be described by way of example with reference to the accompanying drawings, in which:
Figure 1 is a cross-section through a conventional tyre to be manufactured by the method according to the invention,
Figure 2 is a cross-section through a tread package in a pattern ring,
Figure 2a is a diagrammatic side view of the tread package and the pattern ring,
Figure 3 is a cross-section through the tread package and the carcass in the pattern ring, and
Figure 4 is a cross-section through the complete tyre in a mould.

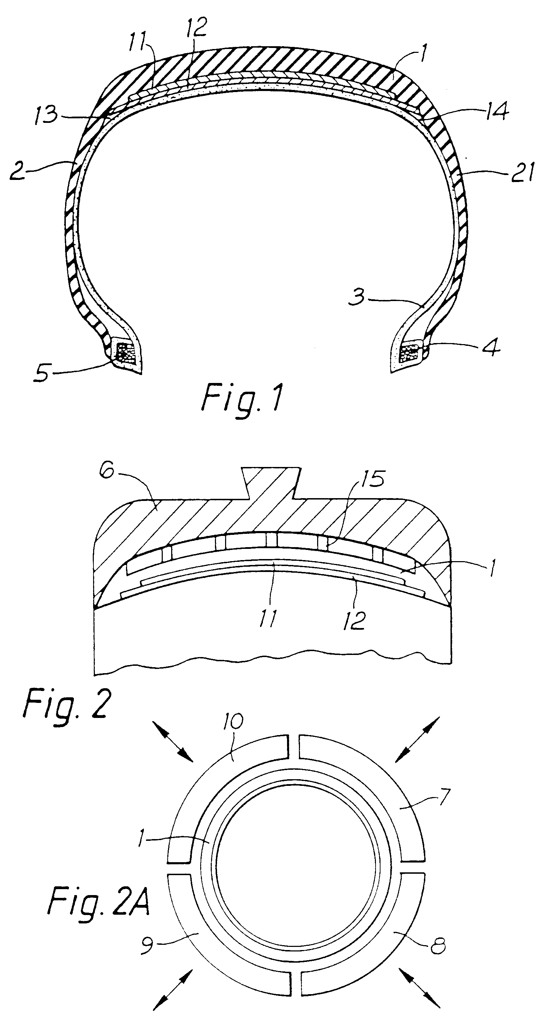

The tyre shown in Figure 1 comprises a tread package of tread and under-tread rubber 1, two breaker layers 11, 12 each of rubberised cord fabric and rubber filler strips 13, 14, a carcass comprising a carcass ply 3 extending between and being anchored around two bead cores 4 and 5 in conventional manner and two sidewalls 2, 21 each comprising a layer of rubber.

In the method of the first embodiment the tread package is assembled by positioning the two filler strips 13, 14, the two breaker layers 11, 12, the under-tread rubber and the tread rubber in turn around a cylindrical mandrel. A pattern ring 6 (see Figure 2 and 2a) comprising a plurality of segments 7, 8, 9, 10 (in this embodiment four) is expanded by moving the segments radially outward and then closed in a controlled manner around the tread package on the mandrel. The segments are provided with ribs 15 and/or other projections etc. so as to impart the required pattern to the tread rubber.

The ring is then heated to a predetermined temperature for a predetermined length of time, e.g. by steam or an electric current, so as to cause the rubber of the tread package to become partially cured. However a veneer of rubber on the radially inner surface of the radially inner breaker layer is deliberately left uncured, or only slightly cured. This assists the adhesion of the tread package to the carcass during a subsequent state in the tyre manufacture. The mandrel is then collapsed radially inwards leaving the tread package located in the closed pattern ring.

The pattern ring 6 and the tread package 1 located therein are then positioned accurately around a conventional tyre building former on which a tyre carcass comprising a carcass ply 3 and beads including bead cores 4, 5, has been assembled in a conventional manner in a cylindrical shape. The former is then expanded to cause the carcass to be shaped to toroidal form and the crown of the carcass to be pressed into contact with the radially inner surface of the tread package 1, and in particular with the uncured, or only slightly cured, veneer on the radially inner breaker ply 12.

The tyre sidewalls 2, 21, i.e. layers of rubber to protect the carcass ply 3 in use of the tyre, may be applied to the carcass when it is in either the cylindrical or toroidal shape.

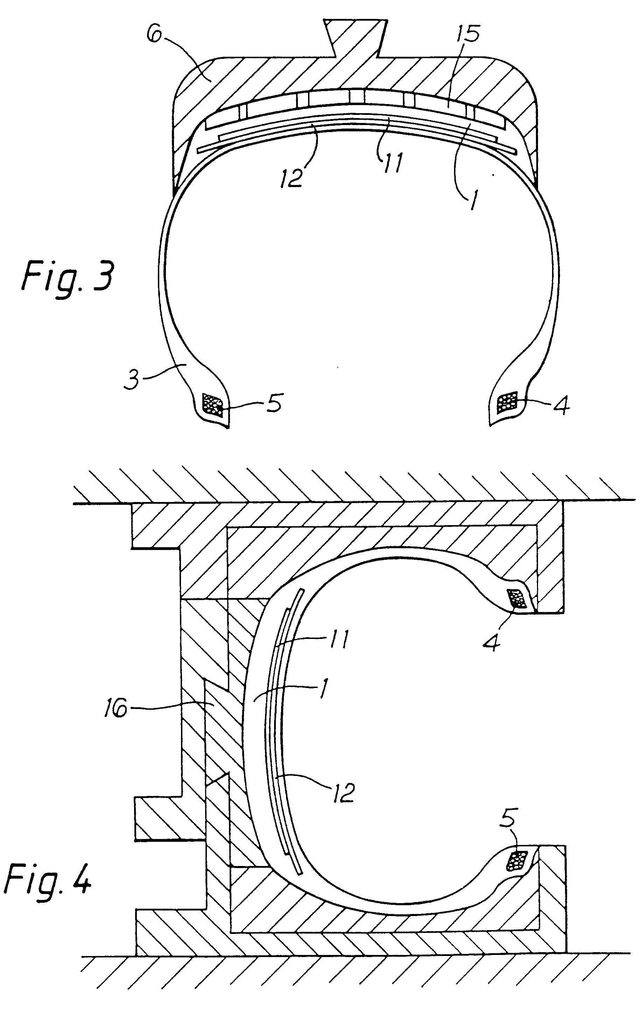

The pattern ring 6 is then separated from the tread rubber by expanding the segments 7, 8, 9 and 10 radially outward, the former collapsed, and the completed green cover, but comprising a partially cured tread package, placed in a mould 16 as shown in Figure 4. This mould is devoid of any means, e.g. ribs or other projections, to impart a pattern to the tread rubber, and may or may not shape the sidewalls, depending on whether the sidewalls were pre-shaped before being applied to the carcass.

The mould, in a press, is then heated in conventional manner to complete the cure of the tyre.

In the method of the second embodiment the tread package is assembled in the pattern ring 6, and the remaining parts of the tyre assembled and shaped within the tread package as described in the method of the first embodiment, but the tread package is not heated and therefore not cured at all until it is in contact with the carcass 3 as shown in Figure 3. However, by limiting the temperature of the pattern ring and the length of time for which it is heated only the tread package and no other part of the tyre becomes partially cured.

It is an advantage of the second embodiment that since the radially outer surface of the carcass is brought into contact with the radially inner surface of the tread package adhesion is ensured.

Both embodiments of the invention allow relatively high pressure to be used during curing of the tread package, thus ensuring good homogeniety. Additionally it is believed that this improves the tread life of the finally cured tyre in use.

Furthermore by imparting a pattern to the tread alone, and then partially curing it, more consistency in shape is obtained from one tyre to the next compared with conventional methods.

Since in both embodiments of the invention the time for the pattern ring to impart a pattern to the tread ring is much shorter than the time taken for a complete tyre to be moulded and cured in a conventional mould the overall cost can be reduced. Furthermore since the mould is devoid of means to impart a pattern to the tread rubber by use of suitable inserts the same mould may be used to cure tyres of different tread widths with a corresponding reduction in expenditure.

Although the mould used in the method of the present invention is devoid of pattern-imparting means it may have one or more radially inward projections which, by locating in the pre-formed tread pattern, serve to locate the green cover accurately in the mould.

A principal advantage of the method according to the present invention is that cure time in the final mould is substantially reduced.

## Claims

1. A method of manufacturing a tyre which comprises assembling an annular tread package (1,11,12,13,14) which includes uncured rubber into a pattern ring (6) to impart a pattern to the tread rubber (1), positioning the remaining components (3,4,5,2,21) of the tyre within the annular tread package (1,11,12,13,14) to assemble a complete tyre, separating the pattern ring (6) from the tread rubber (1), placing the assembled tyre within a mould (16) which contains no means to impart a pattern to the tread rubber (1) and heating the mould (16) completely to cure the tyre, characterised in that the tread rubber (1) is heated to become partially cured while within the pattern ring and in that the said positioning of the remaining components (3,4,5,2,21) within the tread package (1,11,12,13,14) takes place either before or after the tread rubber (1) is heated.

2. A method as claimed in claim 1, characterised in that the tread package (1,11,12,13,14) is assembled on a mandrel before being assembled into the pattern ring (6).

3. A method as claimed in claim 1 or claim 2, characterised in that the pattern ring (6) is heated to cause the tread package (1,11,12,13,14) to become at least partially cured.

4. A method as claimed in claim 3, characterised in that the tread package (1,11,12,13,14) is cured under relatively high pressure.

5. A method as claimed in claim 3 or claim 4, characterised in that a veneer of rubber on the radially inner side of the package (1,11,12,13,14) is partially or wholly uncured.

6. A method as claimed in any one of the preceding claims, characterised in that the pattern ring (6) comprises a plurality of radially movable segments (7,8,9,10) which are moved radially outwards in a controlled manner to separate the ring (6) from the tread rubber (1).

7. A method as claimed in any one of the preceding claims, characterised in that the mould (16) is capable of being adapted to cure, one at a time, tyres of different tread widths.

## Patentansprüche

1. Verfahren zum Herstellen eines Reifens, der den Aufbau eines ringförmigen Laufflächenpakets (1,11,12,13,14) umfasst, das nicht-gehärtetes Gummi in einem Musterring (6) einschliesst, um den Laufflächengummi mit (1) mit einem Muster zu versehen, und wobei die übrigen Komponenten (3,4,5,2,21) des Reifens innerhalb des ringförmigen Laufflächenpakets (1,11,12,13,14) und der Aufbau eines vollständigen Reifens positioniert werden und der Musterring (6) vom Laufflächengummi (1) abgetrennt wird, der aufgebaute Reifen in die Form (16) hineingelegt wird, die keine Mittel enthält, um dem Laufflächengummi (1) ein Muster zu verleihen, und wobei die Form (16) dann erwärmt wird, um den Reifen vollständig auszuhärten, dadurch gekennzeichnet, daß das Laufflächengummi (1) unter teilweiser Härtung erwärmt/erhitzt wird, während es innerhalb des Musterringes ist, und daß die genannte Positionierung der übrigen Komponenten (3,4,5,2,21) innerhalb des Laufflächenpaketes (1,11,12,13,14) entweder vor oder nach dem Erhitzen des Laufflächengummis (1) stattfindet.

2. Verfahren nach Anspruch 1, dadurch gekennzeichnet, daß das Laufflächenpaket (1,11,12,13,14) auf einem Dorn aufgebaut wird, bevor es in dem Musterring (6) zusammengesetzt wird.

3. Verfahren nach Anspruch 1 oder 2, dadurch gekennzeichnet, daß der Musterring (6) erwärmt bzw. erhitzt wird, damit das Laufflächenpaket (1,11,12,13,14) mindestens teilweise gehärtet wird.

4. Verfahren nach Anspruch 3, dadurch gekennzeichnet, daß das Laufflächenpaket (1,11,12,13,14) unter relativ hohem Druck gehärtet wird.

5. Verfahren nach Anspruch 3 oder Anspruch 4, dadurch gekennzeichnet, daß eine Gummiverschleißschicht an der radialen Innenseite des Pakets (1,11,12,13,14) teilweise oder gänzlich ungehärtet ist.

6. Verfahren nach irgendeinem der vorstehenden Ansprüche, dadurch gekennzeichnet, daß der Musterring (6) eine Vielzahl radial beweglicher Segmente (7,8,9,10) umfasst, die in einer gesteuerten Weise radial nach aussen bewegt werden, um den Ring (6) vom Laufflächengumme (1) zu trennen.

7. Verfahren nach irgendeinem der vorstehenden Ansprüche, dadurch gekennzeichnet, daß die Form (16) dazu angepasst werden kann, Reifen verschiedener Laufflächenbreiten zur gleichen Zeit zu härten.

## Revendications

1. Procédé de fabrication d'un pneumatique, qui consiste à assembler un ensemble annulaire de bande de roulement (1, 11, 12, 13, 14), qui comprend du caoutchouc non vulcanisé, dans un anneau (6) de profilage pour conférer un profil au boudin de mélange pour bande de roulement (1), à positionner les constituants restants (3, 4, 5, 2, 21) du pneumatique à l'intérieur de l'ensemble annulaire (1, 11, 12, 13, 14) à bande de roulement pour assembler un pneumatique complet, à séparer l'anneau (6) de profilage du boudin de mélange pour bande de roulement (1), à placer le pneumatique assemblé à l'intérieur d'un moule (16) qui ne contient aucun moyen pour conférer un profil au boudin de mélange pour bande de roulement (1) et à chauffer le moule (16) pour vulcaniser complètement le pneumatique, caractérisé en ce que
le boudin de mélange pour bande de roulement (1) est chauffé pour devenir partiellement vulcanisé tandis qu'il se trouve à l'intérieur de l'anneau de profilage, et en ce que ledit positionnement des constituants restants (3, 4, 5, 2, 21) à l'intérieur de l'ensemble à bande de roulement (1, 11, 12, 13, 14) a lieu avant ou après le chauffage du boudin de mélange pour bande de roulement (1).

2. Procédé selon la revendication 1, caractérisé en ce que l'ensemble (1, 11, 12, 13, 14) à bande de roulement est assemblé sur un mandrin avant d'être assemblé dans l'anneau (6) de profilage.

3. Procédé selon la revendication 1 ou la revendication 2, caractérisé en ce que l'anneau (6) de profilage est chauffé pour vulcaniser au moins partiellement l'ensemble à bande de roulement (1, 11, 12, 13, 14).

4. Procédé selon la revendication 3, caractérisé en ce que l'ensemble (1, 11, 12, 13, 14) à bande de roulement est vulcanisé sous une pression relativement élevée.

5. Procédé selon la revendication 3 ou la revendication 4, caractérisé en ce qu'un revêtement de caoutchouc sur le côté radialement intérieur de l'ensemble (1, 11, 12, 13, 14) est partiellement ou totalement non vulcanisé.

6. Procédé selon l'une quelconque des revendications précédentes, caractérisé en ce que l'anneau (6) de profilage comporte plusieurs segments (7, 8, 9, 10) mobiles radialement qui sont déplacés radialement vers l'extérieur d'une manière commandée pour séparer l'anneau (6) du boudin de mélange pour bande de roulement (1).

7. Procédé selon l'une quelconque des revendications précédentes, caractérisé en ce que le moule (16) peut être adapté pour la vulcanisation, à raison d'un à la fois, de pneumatiques de différentes largeurs de bande de roulement.
